# EUROPEAN PATENT APPLICATION

(11) **EP 4 826 419 A1**
(43) Date of publication of application: **21.10.2026**
(21) Application number: 25192924.6
(22) Date of filing: 30.07.2025
(51) Int. Cl.: G02B 3/00

(54) **METHOD FOR FABRICATING MICRODROPLET ARRAY**

(30) Priority: 15.04.2025 KR 20250048897
(71) Applicant: POSTECH Research and Business Development Foundation, Pohang-si, Gyeongsangbuk-do 37673 (KR)
(72) Inventor: KIM, Youngki, 37673 Gyeongsangbuk-do (KR); CHOI, Daeseop, 37673 Gyeongsangbuk-do (KR); GWAG, Jin Seog, 38658 Gyeongsangbuk-do (KR); LEE, Seung Woo, 41954 Daegu (KR); RHO, Junsuk, 37673 Gyeongsangbuk-do (KR)
(74) Representative: Jung, Minkyu

(57) **Abstract**

The present disclosure relates to a method of fabricating a microdroplet array.

According to an embodiment, it is possible to provide a method of fabricating a microdroplet array including: a first step of obtaining a patterning structure with a structure in which a liquid crystal structure layer is disposed in a separation space between a first substrate with a polymer membrane layer and a first orientation membrane layer and a second substrate with a second orientation membrane layer; and a second step of patterning a microdroplet array composed of a plurality of hemispherical unit microdroplets on a polymer membrane layer-first orientation membrane layer interface by sequentially performing a heating process and a slow cooling process on the obtained patterning structure.

## Description

### CROSS-REFERENCE TO RELATED PATENT APPLICATION

This application claims the benefit of Korean Patent Application No. 10-2025-0048897, filed on April 15, 2025, in the Korean Intellectual Property Office, the disclosure of which is incorporated herein in its entirety by reference.

### TECHNICAL FIELD

The present disclosure relates to a method of fabricating a microdroplet array.

The present disclosure was derived from a research conducted as a part of the STEAM research of the Ministry of Science and ICT (Project Identification No.: 2710009548, Sub-Project No.: 2022M3C1A3081312, Research Project Title: Development of Optical Platform for Commercialization of Smart Anti-Counterfeiting Technology, Institute of Organization: Pohang University of Science and Technology, Research Period: January 01, 2025 to December 31, 2025).

The present disclosure was derived from a research conducted as a part of the STEAM research of the Ministry of Science and ICT (Project Identification No.: 2710003298, Sub-Project No.: RS-2023-00302586, Research Project Title: Development and Commercialization of Highly Intuitive Color-Converting Hydrogen Detection Film/Spray and AI Real-Time Monitoring System, Institute of Organization: Pohang University of Science and Technology, Research Period: February 01, 2025 to December 31, 2025).

There is no property interest of the Korean government in any aspect of this disclosure.

### BACKGROUND

Recently, three-dimensional imaging technologies such as augmented reality (AR), virtual reality (VR), mixed reality (MR), and holographic displays are rapidly developing. These technologies play a key role in metaverse, medical imaging, industrial simulation, head-up display for vehicles, and next-generation digital content fields, and act as an important factor in providing a more realistic and immersive user experience.

In addition, 1) a military radar and missile detection system for multi-wavelength detection, precise focus detection, and aircraft and missile detection, 2) a Light Detection and Ranging (LiDAR) system for autonomous vehicles to secure reliability in environments such as rain, fog, and snow by utilizing a refractive index adjustment property of a liquid crystal-based lens for more precise distance measurement and object identification, 3) a camera lens enabling formation of a thinner and more precise lens structure than a conventional camera module and multi-focal photographing, 4) a hyperspectral imaging (HIS) technology capable of hyperspectral imaging through multi-wavelength sensitivity, and 5) a biosensor and a medical imaging technology for improving a resolution of a microscope and a medical scanner, precise cell analysis, and real-time measurement of a blood flow change, body temperature detection, and the like through a wearable skin sensor, are rapidly developing.

For implementation of these technologies, a high-resolution and high-efficiency optical system is essential, and to this end, a liquid crystal-based microlens array (MLA) is gaining attention. Such a microlens array is a structure in which a plurality of micrometer scale lenses are arranged, and serves to focus and manipulate light and may be essentially utilized for an ultra-thin display and holographic imaging technology.

In particular, a functional liquid crystal micro lens capable of adjusting a focal length by an electrical or optical method has a great advantage in that it is capable of flexible and multi-functional optical control compared to a conventional lens array.

Meanwhile, conventional liquid crystal-based microlens arrays may be patterned through an inkjet printing method, a stamping method using a mold, and an optical patterning-based phase separation-inducing method, but these methods have a common limitation that a minimum diameter of droplets that may be made is limited to tens to hundreds of micrometers and a pattern of droplets may not be removed and re-formed after formation of the pattern.

Specifically, in AR/VR fields where adjusting a focal length in a pixel unit is important, a size of a unit pixel of the microlens tends to decrease according to a recent demand for development of a high-resolution display, and furthermore, a need for a technology for quickly patterning a uniform-sized droplet at a desired position in a wide region is increasing.

### SUMMARY

### TECHNICAL PROBLEM

A method of fabricating a microdroplet array according to an embodiment of the present disclosure is proposed to solve the above problem, and it is possible to dispose a hemispherical shaped droplet structure at a designated position on a substrate, pattern a droplet smaller than that of a conventional method and remove the patterned droplet, and then reform the droplet into a new pattern.

### TECHNICAL SOLUTION

According to an embodiment, it is possible to provide a method of fabricating a microdroplet array including: a first step of obtaining a patterning structure with a structure in which a liquid crystal structure layer is disposed in a separation space between a first substrate with a polymer membrane layer and a first orientation membrane layer and a second substrate with a second orientation membrane layer; and a second step of patterning a microdroplet array composed of a plurality of hemispherical unit microdroplets on a polymer membrane layer-first orientation membrane layer interface by sequentially performing a heating process and a slow cooling process on the obtained patterning structure.

In addition, it is possible to provide the method of fabricating the microdroplet array, wherein the first step includes: disposing the first orientation membrane layer on the first substrate; disposing the polymer membrane layer on the first substrate on which the first orientation membrane layer is disposed; disposing the second orientation membrane layer on the second substrate; disposing the second substrate on which the second orientation membrane layer is disposed on the first substrate on which the polymer membrane layer is disposed to be spaced apart by a predetermined distance; and obtaining the patterning structure by disposing the liquid crystal structure layer in the separation space formed between the first substrate on which the polymer membrane layer is disposed and the second substrate on which the second orientation membrane layer is disposed.

In addition, it is possible to provide the method of fabricating the microdroplet array, wherein, in the first step, the first orientation membrane layer induces liquid crystal molecules to have any one of a vertically oriented state and a horizontally oriented state.

In addition, it is possible to provide the method of fabricating the microdroplet array wherein the second step includes: a heating process of heating the obtained patterning structure to a predetermined heating temperature; and a slow cooling process of slowly cooling the heated patterning structure to room temperature at a predetermined cooling rate.

In addition, it is possible to provide the method of fabricating the microdroplet array, wherein the heating process is inducing liquid crystal molecules in the liquid crystal structure layer to be uniformly diffused into a matrix structure as the liquid crystal molecules are thermally dissolved into a polymer matrix of the polymer membrane layer.

In addition, it is possible to provide the method of fabricating the microdroplet array, wherein the slow cooling process is patterning the microdroplet array by inducing a phase separation phenomenon in which the thermally dissolved liquid crystal molecules are precipitated as a hemispherical unit microdroplet with a radial liquid crystal array structure at the polymer membrane layer-first orientation membrane layer interface.

In addition, it is possible to provide the method of fabricating the microdroplet array, wherein, in the slow cooling process, a diameter and a number density of the hemispherical unit microdroplet are controlled by any one of the heating temperature and the cooling rate.

In addition, it is possible to provide the method of fabricating the microdroplet array, wherein, in the slow cooling process, when the heating temperature increases, the diameter and the number density of the hemispherical unit microdroplet increase as an amount of the liquid crystal molecules that are thermally dissolved into the polymer matrix increases, and when the heating temperature decreases, the diameter and the number density of the hemispherical unit microdroplet decrease as the amount of the liquid crystal molecules that are thermally dissolved into the polymer matrix decreases.

In addition, it is possible to provide the method of fabricating the microdroplet array, wherein, in the slow cooling process, when the cooling rate increases, the diameter of the hemispherical unit microdroplet decreases and the number density thereof increases as a change amount in thermal energy per hour decreases and a growth time of the droplet decreases, and when the cooling rate decreases, the diameter of the hemispherical unit microdroplet increases and the number density thereof decreases as the change amount in thermal energy per hour increases and the growth time of the droplet increases.

In addition, it is possible to provide the method of fabricating the microdroplet array, wherein the second step further includes a light irradiation process of irradiating light to a partial region of a lower end portion of the obtained patterning structure before the heating process.

In addition, it is possible to provide the method of fabricating the microdroplet array, wherein the light irradiation process is partitioning a surface of the first orientation membrane layer into a droplet-preferred region and a droplet-unpreferred region by controlling a work of adhesion between a liquid crystal and a surface (WSL) of the first orientation membrane layer through selective light irradiation, the droplet-preferred region is a region in which the phase separation phenomenon is activated, and the droplet-unpreferred region is a region in which the phase separation phenomenon is suppressed.

In addition, it is possible to provide the method of fabricating the microdroplet array, wherein, in the light irradiation process, the droplet-preferred region has any one grid pattern selected from a circular grid pattern, a triangular grid pattern, a square grid pattern, a pentagonal grid pattern, a hexagonal grid pattern, a heptagonal grid pattern, an octagonal grid pattern, a nonagonal grid pattern, and a decagonal grid pattern.

In addition, it is possible to provide the method of fabricating the microdroplet array, wherein, in the slow cooling process, as the hemispherical unit microdroplet is selectively positioned in the droplet-preferred region, a microdroplet array with any one pattern selected from a square packing pattern in which a droplet is arranged in a square grid pattern on a two-dimensional plane and a hexagonal packing pattern in which the droplet is arranged in a hexagonal grid pattern on the two-dimensional plane is patterned.

In addition, it is possible to provide the method of fabricating the microdroplet array further including a third step of performing the second step again after removing the pre-patterned microdroplet array by sequentially performing a reverse reaction process of irradiating light in a predetermined wavelength range and a heat treatment process on the patterning structure on which the microdroplet array is patterned after the second step.

According to an embodiment, it is possible to provide a microdroplet array that is patterned at a polymer membrane layer-first orientation membrane layer interface by obtaining a patterning structure with a structure in which a liquid crystal structure layer is disposed in a separation space between a first substrate with a polymer membrane layer and a first orientation membrane layer and a second substrate with a second orientation membrane layer and sequentially performing a heating process and a slow cooling process on the obtained patterning structure, and is composed of a plurality of hemispherical unit microdroplets.

### ADVANTAGEOUS EFFECTS

In a method of fabricating a microdroplet array according to an embodiment of the present disclosure, there is an effect that it is possible to dispose a hemispherical shaped droplet structure based on a liquid crystal at a designated position on a substrate, pattern a droplet smaller than that of a conventional method and remove the patterned droplet, and then reform the droplet into a new pattern.

### BRIEF DESCRIPTION OF THE DRAWINGS

FIG. 1 is a flow chart for describing a method of fabricating a microdroplet array according to an embodiment of the present disclosure.
FIG. 2 is a schematic view for describing a method of fabricating a microdroplet array according to an embodiment of the present disclosure.
FIG. 3 is a view for describing a microdroplet with various liquid crystal array structures.
FIG. 4 is a schematic view for specifically describing a method of fabricating a microdroplet array according to an embodiment of the present disclosure.
FIG. 5 is a schematic view for describing patterning of a microdroplet array with various shapes using the method of fabricating the microdroplet array.
FIG. 6 is a view for describing a change in a liquid crystal array structure of a microdroplet according to light irradiation time.
FIG. 7 is a view for describing a change in the liquid crystal array structure of the microdroplet according to an electric field application.
FIG. 8 is a view for describing a polymerization of a microdroplet according to a photopolymerization reaction.
FIG. 9 is an experimental result for evaluating diameter control of a droplet according to a heating temperature.
FIG. 10 is an experimental result for evaluating a density control of the droplet according to a cooling rate.
FIG. 11 is an experimental result for evaluating a preferred position and a liquid crystal array structure of the droplet.
FIG. 12 is an experimental result for evaluating patterning of a microdroplet array with various shapes.
FIG. 13 is a view for describing a photomask design.
FIG. 14 is an experimental result for evaluating patterning of a microdroplet array consisting of droplets of various diameters and having a square packing pattern.
FIG. 15 is an experimental result for describing color expression according to a diameter of a droplet.
FIG. 16 is an experimental result for describing color expression according to an optical power density of light irradiation.
FIG. 17 is an experimental result for describing color expression according to a change in a liquid crystal array structure after electric field application.
FIG. 18 is an experimental result for evaluating patterning of a microdroplet array according to a polymer material.

### DETAILED DESCRIPTION OF THE EMBODIMENTS

Preferred embodiments of the present disclosure will be described in detail with reference to the attached drawings in order to fully understand the configuration and effects of the present disclosure.

The present disclosure is not limited to the embodiments disclosed herein, but can be implemented in various forms and be subject to various modifications and changes. However, the present disclosure is provided solely to ensure that the disclosure of the present disclosure is complete through the description of the present embodiments and to fully inform those having ordinary skill in the art of the scope of the disclosure. The components in the attached drawings are enlarged from their actual size for convenience of the description, and the proportions of each component may be exaggerated or reduced.

The terms used herein is for the purpose of describing the embodiments only and is not intended to be limiting of the disclosure. In addition, the terms used herein may be interpreted as having a meaning commonly known to those having ordinary skill in the art unless otherwise defined. In addition, as used herein, the singular forms may include the plural forms unless the context clearly dictates otherwise. The terms "comprises" and/or "comprising" used herein specify the presence of a referenced component, step, operation, and/or element, but do not exclude the presence or addition of one or more other components, steps, operations, and/or elements.

In the present specification, when a layer is referred as being 'on' another layer, it may be formed directly on the surface of the other layer, or there may be a third layer interposed therebetween. As used herein, the terms first, second, etc. are used to describe various regions, layers, etc., but these regions and layers should not be limited by these terms. These terms are only used to distinguish one region or layer from another. Thus, a part referred to as a first part in one embodiment may be referred to as a second part in another embodiment. The embodiments described and exemplified herein also include complementary embodiments thereof. Like reference numerals may refer to like or corresponding components throughout the specification.

The present disclosure relates to a novel method of patterning a microdroplet array by regularly arranging a hemispherical unit microdroplet composed of liquid crystal molecules on a substrate at a predetermined position.

Specifically, in a method of fabricating a microdroplet array of the present disclosure, after liquid crystal molecules are dissolved inside a polymer membrane through a heating process, the microdroplet array may be patterned by using that the dissolved liquid crystal molecules form a microdroplet on a substrate by phase separation between a polymer and a liquid crystal through a slow cooling process.

### <Method of fabricating microdroplet array>

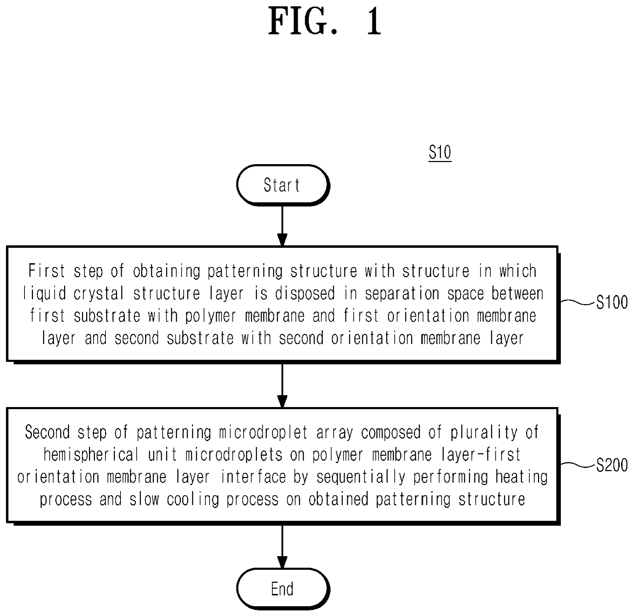

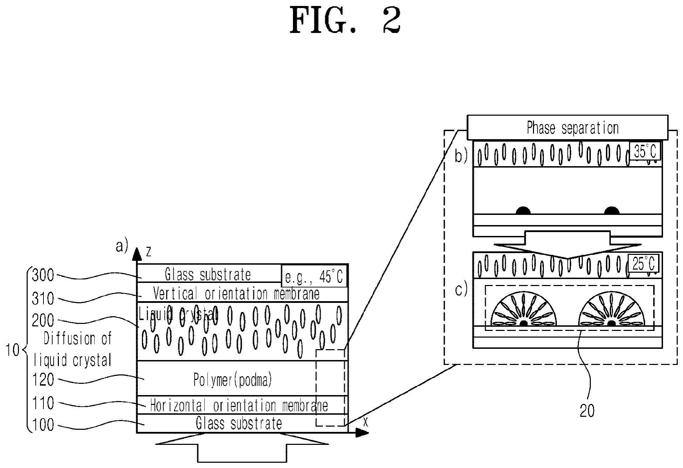

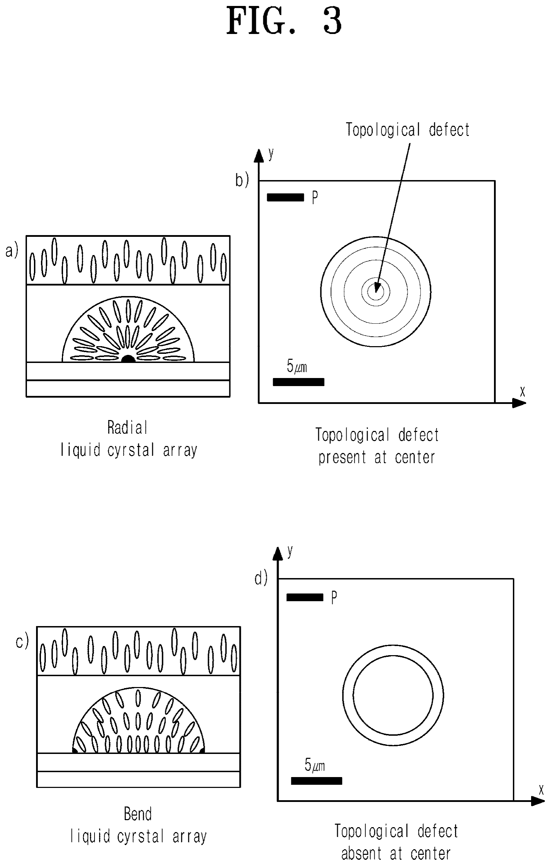

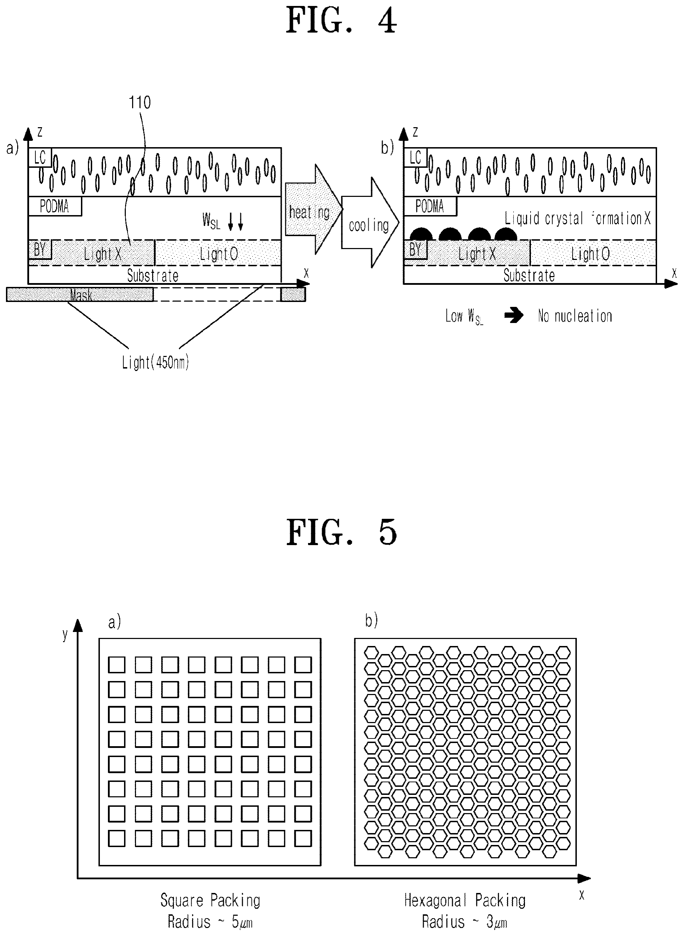

FIG. 1 is a flow chart for describing a method of fabricating a microdroplet array according to an embodiment of the present disclosure, FIG. 2 is a schematic view for describing a method of fabricating a microdroplet array according to an embodiment of the present disclosure, FIG. 3 is a view for describing a microdroplet with various liquid crystal array structures, FIG. 4 is a schematic view for specifically describing a method of fabricating a microdroplet array according to an embodiment of the present disclosure, and FIG. 5 is a schematic view for describing patterning of a microdroplet array with various shapes using the method of fabricating the microdroplet array.

FIG. 2A is a schematic view for describing a patterning structure, and FIG. 2B and FIG. 2C are schematic views for describing a heating process and a slow cooling process.

FIG. 3A is a schematic view of a radial liquid crystal array, FIG. 3B is an optical image of the radial liquid crystal array, FIG. 3C is a schematic view of a bend liquid crystal array, and FIG. 3D is an optical image of the bend liquid crystal array.

FIG. 4A and FIG. 4B are schematic views for describing a droplet-preferred region according to light irradiation.

FIG. 5A is a schematic view of a microdroplet array with a square packing pattern, and FIG. 5B is a schematic view of a microdroplet array with a hexagonal packing pattern.

First, referring to FIGS. 1 to 5, a method of fabricating a microdroplet array (S10) according to an embodiment of the present disclosure may include a first step (S100) of obtaining a patterning structure 10 with a structure in which a liquid crystal structure layer 200 is disposed in a separation space between a first substrate 100 with a polymer membrane layer 120 and a first orientation membrane layer 110 and a second substrate 300 with a second orientation membrane layer 310; and a second step (S200) of patterning a microdroplet array 20 composed of a plurality of hemispherical unit microdroplets at a polymer membrane layer-first orientation membrane layer interface by sequentially performing a heating process and a slow cooling process on the obtained patterning structure 10.

The method of fabricating the microdroplet array (S10) according to an embodiment of the present disclosure includes forming the patterning structure 10 with a structure in which the first substrate 100, the first orientation membrane layer 110, the polymer membrane layer 120, the liquid crystal structure layer 200, the second orientation membrane layer 310, and the second substrate 300 are sequentially stacked, and then performing a heat treatment process including the heating process and the slow cooling process on the patterning structure 10 to form the hemispherical unit microdroplets at the polymer membrane layer-first orientation membrane layer interface.

Here, the first substrate 100 means a solid-phase substrate capable of supporting a subsequent material layer, and any substrate known in the art to be usable for a corresponding application, including an inorganic material may be used as the first substrate 100 material.

In the embodiments of the present disclosure, the inorganic material includes glass, quartz, and silica, but it is not limited thereto.

The first orientation membrane layer 110 is disposed on the first substrate 100 and means a thin membrane that controls an orientation of liquid crystal molecules in a liquid crystal display, optical element, and the like, and may induce the liquid crystal molecules to be aligned in a specific direction.

In addition, when light such as ultraviolet light or visible light is irradiated, the first orientation membrane layer 110 may have a property of decreasing surface tension due to trans-cis isomerization that is a phenomenon in which a trans form and a cis form are reversibly converted in a double bond or a ring structure of a compound.

The first orientation membrane layer 110 may be a trans-cis isomer in which a structural change inside molecules is induced by absorbing the ultraviolet light or the visible light through a photoisomerization process, and in an embodiment of the present disclosure, the first orientation membrane layer 110 may include any one dye selected from a group consisting of Brilliant Yellow, Methyl Orange, Congo Red, Disperse Yellow, Disperse Orange 3, Sunset Yellow, Acid Yellow, and Amaranth.

In addition, in another embodiment of the present disclosure, the first orientation membrane layer 110 may include any one polymer selected from a group consisting of Azobenzene-Polyimide, Disperse Red 1-Polyimide, Disperse Orange 3-Polyimide, 4,4'-Dihydroxyazobenzene, and Azophenyl-polyimide.

In addition, in an embodiment of the present disclosure, the first orientation membrane layer 110 may include any one material selected from polyimide and polyvinyl alcohol.

The polymer membrane layer 120 is disposed on the first orientation membrane layer 110 and may be a polymer substrate in which the liquid crystal molecules may be thermally dissolved.

In addition, the polymer membrane layer 120 may include a polymer capable of interacting with the liquid crystal molecules, and specifically, may be used as a matrix that induces thermal dissolution and phase separation of the liquid crystal molecules.

More specifically, the polymer is hydrophobic, a glass transition temperature (Tg) of the polymer may be lower than a final cooling temperature (or room temperature) of a slow cooling process (S220) to be described later, and a melting temperature (Tm) of the polymer may be lower than a final heating temperature of a heating process (S210) to be described later.

That is, the polymer is hydrophobic so that a liquid crystal may be sufficiently dissolved, and any polymer material having a fluid state in which the liquid crystal may be partially dissolved in a temperature elevating process of the heating process (S210) to be described later, securing stability by transforming to a rubber state in a cooling process of the slow cooling process (S220) to be described later, and maintaining minimum fluidity capable of growing the liquid crystal may be used without limitation.

In addition, the polymer membrane layer 120 may induce the liquid crystal molecules to be aligned in a specific direction.

In an embodiment of the present disclosure, the polymer membrane layer 120 may be any one polymer selected from a group consisting of Poly(octadecyl methacrylate), Poly(lauryl methacrylate), Poly(2-ethylhexyl methacrylate), and Poly(butyl methacrylate).

The liquid crystal structure layer 200 may be a structure in which liquid crystal molecules are aligned in a specific orientation, and may include at least one material selected from a group consisting of a nematic liquid crystal, a smectic liquid crystal, and a cholesteric liquid crystal.

In the embodiments of the present disclosure, a thermotropic liquid crystal may be used as the liquid crystal structure layer 200 without limitation, and specifically, a thermotropic liquid crystal material of which a temperature of thermal dissolution in the polymer membrane layer 120 (Tdissolution) is lower than a highest temperature (T_{LC-ISO}) capable of maintaining a liquid crystal phase may be used as the liquid crystal structure layer 200 without limitation. Here, the highest temperature (T_{LC-ISO}) capable of maintaining the liquid crystal phase means a temperature at which the thermotropic liquid crystal loses the liquid crystal phase and becomes an isotropic material.

The second orientation membrane layer 310 is disposed on the liquid crystal structure layer 200 and means a thin membrane that controls an orientation of the liquid crystal molecules in a liquid crystal display, optical element, and the like, and may induce the liquid crystal molecules to be aligned in a specific direction.

Any substrate known in the art to be usable for a corresponding application, including an inorganic material may be used as the second substrate 300.

In an embodiment of the present disclosure, the inorganic material includes glass, quartz, and silica, but it is not limited thereto.

Hereinafter, detailed steps of the present disclosure will be described.

First, the first step (S100) is obtaining the patterning structure 10 with a structure in which the first substrate 100, the first orientation membrane layer 110, the polymer membrane layer 120, the liquid crystal structure layer 200, the second orientation membrane layer 310, and the second substrate 300 are sequentially stacked.

Specifically, in an embodiment of the present disclosure, the first step (S100) includes disposing the first orientation membrane layer 110 on the first substrate 100 (S110), disposing the polymer membrane layer 120 on the first substrate 100 on which the first orientation membrane layer 110 is disposed (S120), disposing the second orientation membrane layer 310 on the second substrate 300 (S130), disposing the second substrate 300 on which the second orientation membrane layer 310 is disposed to be spaced apart by a predetermined distance on the first substrate 100 on which the polymer membrane layer 120 is disposed (S140), and obtaining the patterning structure 10 by disposing the liquid crystal structure layer 200 in the separation space formed between the first substrate 100 on which the polymer membrane layer 120 is disposed and the second substrate 300 on which the second orientation membrane layer 310 is disposed (S150).

In the first step (S100), the second orientation membrane layer 310 is for securing ease of observation and may induce the liquid crystal molecules in the liquid crystal structure layer 200 to have any one of a vertically oriented state and a horizontally oriented state, and in a preferred embodiment of the present disclosure, the second orientation membrane layer 310 may induce the liquid crystal molecules in the liquid crystal structure layer 200 to have the vertically oriented state.

In addition, in the first step (S100), the first orientation membrane layer 110 is for controlling a liquid crystal array structure of a hemispherical unit microdroplet to be described later, and the first orientation membrane layer 110 may induce the liquid crystal molecules to have any one of the vertically oriented state and the horizontally oriented state, and in a preferred embodiment of the present disclosure, the first orientation membrane layer 110 may induce the liquid crystal molecules to have the horizontally oriented state.

Accordingly, when the hemispherical unit microdroplet is precipitated on the first orientation membrane layer 110 in the second step (S200) to be described later, the hemispherical unit microdroplet may have any one structure selected from a radial liquid crystal array structure and a bend liquid crystal array structure.

Specifically, referring to FIG. 3, when the first orientation membrane layer 110 induces the liquid crystal molecules to have the horizontally oriented state, the hemispherical unit microdroplet has the radial liquid crystal array structure, and when the first orientation membrane layer 110 induces the liquid crystal molecules to have the vertically oriented state, the hemispherical unit microdroplet has the bend liquid crystal alignment structure.

Here, the radial liquid crystal array structure may mean a structure in which a topological defect is positioned at a center of the hemispherical unit microdroplet, and the bend liquid crystal alignment structure may mean a structure in which the topological defect is positioned at both poles of the hemispherical unit microdroplet.

Next, the second step (S200) is inducing phase separation between the polymer and the liquid crystal to form the hemispherical unit microdroplet at the polymer membrane layer-first orientation membrane layer interface.

Specifically, in an embodiment of the present disclosure, the second step (S200) may include a heating process (S210) of heating the obtained patterning structure 10 to a predetermined heating temperature; and a slow cooling process (S220) of slowly cooling the heated patterning structure 10 to room temperature at a predetermined cooling rate.

The heating process (S210) is inducing the liquid crystal molecules in the liquid crystal structure layer 200 to be uniformly diffused into a matrix structure as the liquid crystal molecules are thermally dissolved into a polymer matrix of the polymer membrane layer 120.

In the heating process (S210), since the polymer membrane layer 120 is formed of a polymer membrane with solubility of the liquid crystal molecules, the liquid crystal molecules may be dissolved into the polymer membrane layer 120 when temperature is increased through the heating process.

Accordingly, when the heating step (S210) is completed, the liquid crystal molecules may interact with the polymer matrix and be uniformly diffused into the matrix.

In a preferred embodiment of the present disclosure, the polymer membrane layer 120 may include Poly(octadecyl methacrylate)(PODMA), and the heating temperature satisfies a temperature range of 35 °C to 55 °C.

In addition, when the heating temperature increases, an amount of the liquid crystal molecules diffusing into the polymer matrix may increase, and when the heating temperature decreases, the amount of the liquid crystal molecules diffusing into the polymer matrix may decrease.

The slow cooling process (S220) is patterning the microdroplet array by inducing a phase separation phenomenon in which the thermally dissolved liquid crystal molecules are precipitated as hemispherical unit microdroplets with a radial liquid crystal array structure at the polymer membrane layer-first orientation membrane layer interface.

In the slow cooling process (S220), the phase separation means a phenomenon in which two different phases are separated in the polymer membrane layer in which the liquid crystal molecules are thermally dissolved, and specifically, the phases may be separated as a solubility between the polymer and the liquid crystal changes due to a temperature change during the slow cooling process.

Accordingly, when the slow cooling process (S220) is completed, the liquid crystal molecules may be precipitated as the hemispherical unit microdroplet at the polymer membrane layer-first orientation membrane layer interface, more specifically, on a surface of the first orientation membrane layer 110.

In addition, in an embodiment of the present disclosure, when surface tension is constant over an entire surface region of the first orientation membrane layer 110, that is, when a work of adhesion between the surface and the liquid crystal is constant over the entire surface region of the first orientation membrane layer 110, the hemispherical unit microdroplet may be arranged in an irregular pattern on a two-dimensional plane to pattern the microdroplet array 20.

In an embodiment of the present disclosure, the first orientation membrane layer 110 may include any one material selected from polyimide and polyvinyl alcohol, and the cooling rate satisfies a range of 2 to 20 °C/min.

In addition, in the slow cooling process (S220) of the present disclosure, a diameter and a number density of the hemispherical unit microdroplet may be controlled by any one of the heating temperature and the cooling rate.

In other words, the diameter and the number density of the hemispherical unit microdroplet precipitated on the first orientation membrane layer 110 may be adjusted by controlling the heating temperature and the cooling rate.

Specifically, when the heating temperature increases in the slow cooling process (S220), the diameter and the number density of the hemispherical unit microdroplet increase as the amount of the liquid crystal molecules that are thermally dissolved into the polymer matrix increases.

In addition, when the heating temperature decreases in the slow cooling process (S220), the diameter and the number density of the hemispherical unit microdroplet decrease as the amount of liquid crystal molecules thermally dissolved into the polymer matrix decreases.

That is, as heating is performed to a higher temperature, a greater amount of the liquid crystal is diffused and an amount that is phase-separated during the subsequent slow cooling process may also increase.

In addition, when the cooling rate increases in the slow cooling process (S220), the diameter of the hemispherical unit microdroplet decreases and the number density thereof increases as a change amount in thermal energy per hour decreases and a growth time of the droplet decreases.

In addition, when the cooling rate decreases in the slow cooling process (S220), the diameter of the hemispherical unit microdroplet increases and the number density thereof decreases as the change amount in thermal energy per hour increases and the growth time of the droplet increases.

That is, when the slow cooling process is performed at a faster rate, more droplets are formed at an initial stage because the change in thermal energy per hour is large, but the formed droplets are quickly cooled, and thus a time required for the growth is insufficient.

Meanwhile, referring to FIG. 4, in an embodiment of the present disclosure, the second step (S200) may further include a light irradiation process (S205) of irradiating light to a partial region of a lower end portion of the obtained patterning structure 10 before the heating process (S210).

The light irradiation process (S205) may irradiate light for a predetermined light irradiation time, and the predetermined light irradiation time may satisfy a range of 40 to 60 seconds.

In addition, in an embodiment of the present disclosure, the first orientation membrane layer 110 may be a trans-cis isomer in which a structural change inside molecules is induced by absorbing the visible light, and specifically, the first orientation membrane layer 110 may include any one dye selected from a group consisting of Brilliant Yellow, Methyl Orange, Congo Red, Disperse Yellow, Disperse Orange 3, Sunset Yellow, Acid Yellow, and Amaranth.

The light irradiation process (S205) is partitioning the surface of the first orientation membrane layer 110 into a droplet-preferred region and a droplet-unpreferred region by controlling the work of adhesion between the surface and the liquid crystal (WSL) of the first orientation membrane layer 110 through selective light irradiation.

Here, the droplet-preferred region is a region in which the phase separation phenomenon is activated, and the droplet-unpreferred region is a region in which the phase separation phenomenon is suppressed.

In addition, in the light irradiation process (S205), the droplet-preferred region may have a predetermined grid pattern, and specifically, in the light irradiation process (S205), the droplet-preferred region may have any one grid pattern selected from a circular grid pattern, a triangular grid pattern, a square grid pattern, a pentagonal grid pattern, a hexagonal grid pattern, a heptagonal grid pattern, an octagonal grid pattern, a nonagonal grid pattern, and a decagonal grid pattern.

In the light irradiation process (S205), when visible light satisfying a wavelength range of 430 to 470 nm is irradiated to the partial region of the lower end portion of the patterning structure 10 using a mask, trans-cis isomerization occurs inside the first orientation membrane layer 110, and a light-irradiated region of the first orientation membrane layer 110 becomes a cis state, and thus, as surface tension decreases, the work of adhesion between surface and liquid crystal of the corresponding region decreases.

Accordingly, when the light irradiation process (S205) is completed, the surface of the first orientation membrane layer 110 may be partitioned into a light-irradiated region and a non-light-irradiated region, that is, a droplet-preferred region and a droplet-unpreferred region.

Furthermore, when the heating process (S210) of heating the light-irradiated patterning structure and the slow cooling process (S220) of slowly cooling the heated patterning structure to room temperature are completed, the hemispherical unit microdroplet is precipitated only in the droplet-preferred region that is the non-light-irradiated region by a phase separation induction phenomenon and is not precipitated in the droplet-unpreferred region that is the light-irradiated region.

Accordingly, in an embodiment of the present disclosure, when photoisomerization-based surface tension patterning is performed on the first orientation membrane layer 110, that is, when patterning of the work of adhesion between the surface and the liquid crystal is performed on the first orientation membrane layer 110, the droplet-preferred region has the predetermined grid pattern, and the hemispherical unit microdroplet may be arranged in a regular pattern on a two-dimensional plane in the patterned droplet-preferred region to pattern the microdroplet array 20.

Specifically, in an embodiment of the present disclosure, when the slow cooling process (S220) is completed, the liquid crystal molecules may be precipitated as the hemispherical unit microdroplet at the polymer membrane layer-first orientation membrane layer interface, more specifically, on the droplet-preferred region with the predetermined grid pattern of the first orientation membrane layer 110, and more specifically, in the slow cooling process (S220), as the hemispherical unit microdroplet is selectively positioned in the droplet-preferred region, the microdroplet array with any one pattern selected from a square packing pattern in which the droplet is arranged in a square grid pattern on a two-dimensional plane and a hexagonal packing pattern in which the droplet is arranged in a hexagonal grid pattern on the two-dimensional plane may be patterned.

Meanwhile, in another embodiment of the present disclosure, a method of fabricating a microdroplet array may further include a third step (S300) of performing the second step (S200) again after removing the pre-patterned microdroplet array 20 by sequentially performing a reverse reaction process of irradiating light in a predetermined wavelength range to and a heat treatment process on the patterning structure 10 on which the microdroplet array is patterned after the second step (S200).

In addition, in the method of fabricating the microdroplet array (S10) according to another embodiment of the present disclosure, the first orientation membrane layer 110 may be a trans-cis isomer in which a structural change inside molecules is induced by absorbing ultraviolet light, and specifically, may include any one polymer selected from a group consisting of Azobenzene-Polyimide, Disperse Red 1-Polyimide, Disperse Orange 3-Polyimide, 4,4'-Dihydroxyazobenzene, and Azophenyl-polyimide.

In a method of fabricating the microdroplet array (S10) according to another embodiment of the present disclosure, a light irradiation process (S205) may be irradiating ultraviolet light satisfying a wavelength range of 360 to 385 nm to a partial region of a lower end portion of the obtained patterning structure 10.

Specifically, the third step (S300) may include performing a reverse reaction process of irradiating visible light satisfying a wavelength range of 400 to 500 nm to an entire lower region of the patterning structure 10 on which the microdroplet array is patterned (S310), performing a heat treatment process of heating and then cooling the irradiated patterning structure 10 (S320), and performing the second step (S200) again (S330).

In the third step (S300) according to another embodiment of the present disclosure, the performing of the reverse reaction process (S310) is converting an entire surface region of a first orientation membrane layer 110 into a trans state, and the performing of the heat treatment process (S320) is inducing the pre-patterned microdroplet array to be re-dissolved into the polymer membrane layer 120.

Specifically, in the performing of the reverse reaction process (S310), the trans-cis isomerization occurs inside the first orientation membrane layer 110 and a region of the first orientation membrane layer 110 in which visible light is irradiated becomes a trans state, and thus a work of adhesion between surface and liquid crystal of the entire surface region may increase as surface tension increases.

Thereafter, the performing of the heat treatment process (S320) may induce the pre-patterned microdroplet array, that is, the liquid crystal molecules, to be uniformly diffused into the matrix structure as the hemispherical unit microdroplet is thermally re-dissolved into the polymer matrix of the polymer membrane layer 120.

Accordingly, the pre-patterned microdroplet array 20 may be removed through the performing of the reverse reaction process (S310) and the performing of the heat treatment process (S320).

Furthermore, in the third step (S300) according to another embodiment of the present disclosure, the performing of the second step (S200) again (S330) may include a heating process (S210) of heating a heat-treated patterning structure 10 to a predetermined heating temperature, and a slow cooling process (S220) of slowly cooling the heated patterning structure 10 to room temperature at a predetermined cooling rate.

In addition, in the third step (S300) according to another embodiment of the present disclosure, the performing of the second step (S200) again (S330) may include a light irradiation process (S205) of irradiating ultraviolet light with a wavelength range of 360 to 385 nm to the partial region of the lower end portion of the heat-treated patterning structure 10, the heating process (S210) of heating an ultraviolet light-irradiated patterning structure 10 to a predetermined heating temperature, and the slow cooling process (S220) of slowly cooling the heated patterning structure 10 to room temperature at the predetermined cooling rate.

The light irradiation process (S205) according to another embodiment of the present disclosure is the same as the light irradiation process (S205) according to an embodiment of the present disclosure in that it induces trans-cis isomerization inside the first orientation membrane layer 110 except that a wavelength range of the irradiated light is different.

Specifically, in the light irradiation process (S205) according to another embodiment of the present disclosure, when ultraviolet light satisfying a wavelength range of 360 to 385 nm is irradiated to the partial region of the lower end portion of the patterning structure 10 using a mask, trans-cis isomerization occurs inside the first orientation membrane layer 110, and as surface tension of an ultraviolet-irradiated region of the first orientation membrane layer 110 decreases, the work of adhesion between surface and liquid crystal of the corresponding region decreases.

Accordingly, when the light irradiation process (S205) is completed, the surface of the first orientation membrane layer 110 may be partitioned into an ultraviolet-irradiated region and an ultraviolet-non-irradiated region, that is, a droplet-preferred region and a droplet-unpreferred region.

Furthermore, when the heating process of heating the ultraviolet light-irradiated patterning structure 10 and the slow cooling process of slowly cooling the heated patterning structure to room temperature are completed, the hemispherical unit microdroplet is precipitated only in the droplet-preferred region that is the ultraviolet-non-irradiated region by the phase separation induction phenomenon, and is not precipitated in the droplet-unpreferred region that is the ultraviolet-irradiated region.

Accordingly, the method of fabricating the microdroplet array according to another embodiment of the present disclosure is capable of patterning the microdroplet array on one first orientation membrane layer 110 surface, then removing the same, and then patterning the same again.

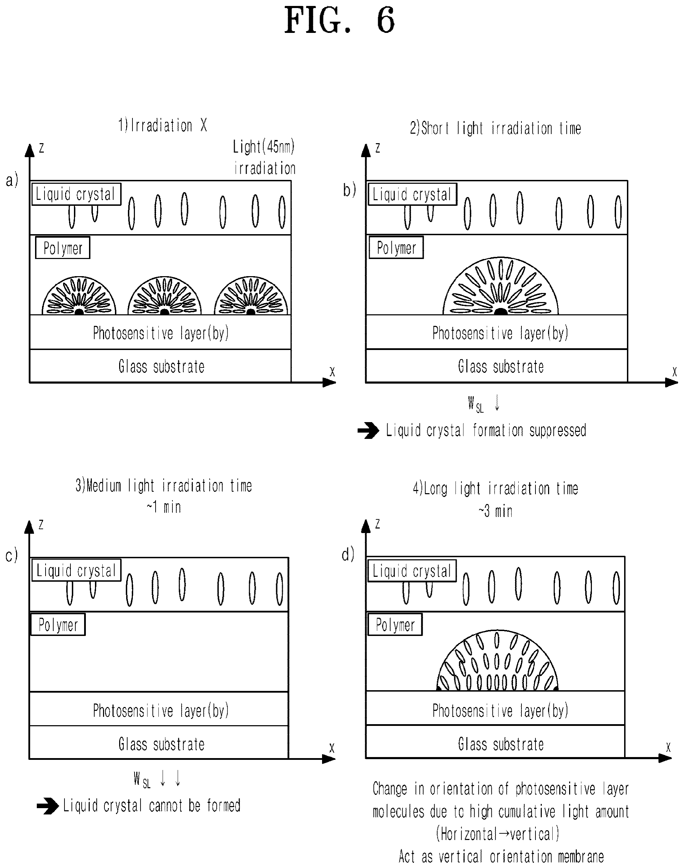

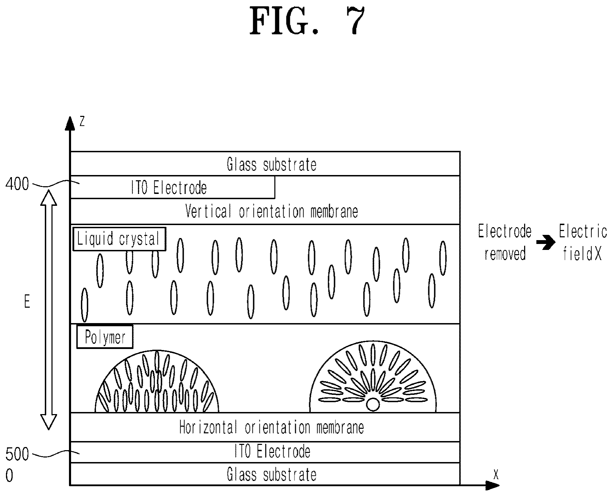

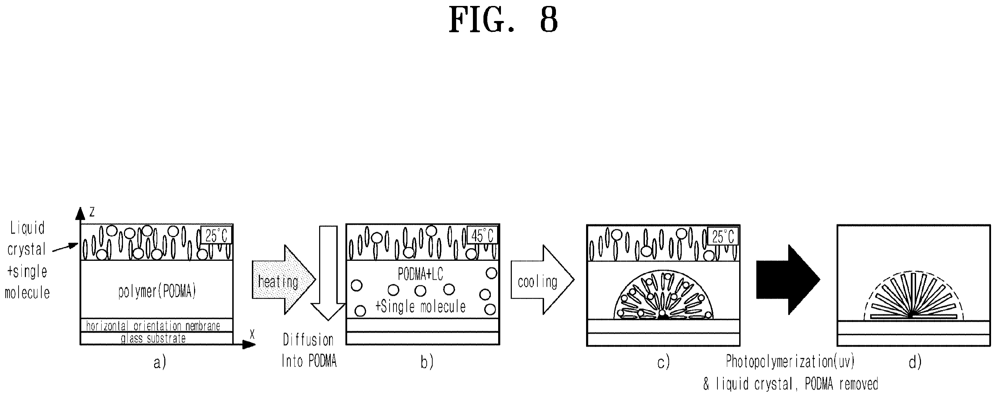

FIG. 6 is a view for describing a change in a liquid crystal array structure of a microdroplet according to light irradiation time, FIG. 7 is a view for describing a change in the liquid crystal array structure of the microdroplet according to an electric field application, and FIG. 8 is a view for describing a polymerization of a microdroplet according to a photopolymerization reaction.

FIG. 6A is a schematic view showing the liquid crystal array structure of the microdroplet when light irradiation time is 0 seconds, FIG. 6B is a schematic view showing the liquid crystal array structure of the microdroplet when light irradiation time is 10 to 30 seconds, FIG. 6C is a schematic view showing the liquid crystal array structure of the microdroplet when light irradiation time is 40 to 60 seconds, and FIG. 6D is a schematic view showing the liquid crystal array structure of the microdroplet when light irradiation time is 2 to 3 minutes.

FIGS. 8A to 8C are views for describing a photopolymerization process of a microdroplet.

Meanwhile, referring to FIG. 6, in a first example of a method of fabricating a microdroplet array according to still another embodiment of the present disclosure, a light irradiation process (S205) may be irradiating light to a partial region of a lower end portion of an obtained patterning structure 10 for any one light irradiation time selected from short light irradiation time, medium light irradiation time, and long light irradiation time.

Here, the short light irradiation time may satisfy a range of 10 to 30 seconds, the medium light irradiation time may satisfy a range of 40 to 60 seconds, and the long light irradiation time may satisfy a range of 2 to 3 minutes.

For example, in the first example, a first orientation membrane layer 110 includes Brilliant Yellow (BY) that induces liquid crystal molecules to have a horizontally oriented state, and when visible light satisfying a wavelength range of 430 to 470 nm is irradiated to the partial region of the lower end portion of the patterning structure 10 using a mask, trans-cis isomerization occurs inside the first orientation membrane layer 110, and a light-irradiated region of the first orientation membrane layer 110 becomes a cis state, and thus a work of adhesion between surface and liquid crystal of a corresponding region decreases as surface tension decreases.

Accordingly, when the light irradiation process (S205) is completed, the surface of the first orientation membrane layer 110 may be partitioned into a light-irradiated region and a non-light-irradiated region, that is, a droplet-preferred region and a droplet-unpreferred region.

In this case, in the first example, when the light irradiation time is the short light irradiation time satisfying the range of 10 to 30 seconds, a hemispherical unit microdroplet with a radial liquid crystal array structure is precipitated in both the droplet-preferred region and the droplet-unpreferred region, but the hemispherical unit microdroplet precipitated in the droplet-unpreferred region is precipitated to be larger than the hemispherical unit microdroplet precipitated in the droplet-preferred region, and a number of hemispherical unit microdroplets precipitated in the droplet-unpreferred region is less than a number of hemispherical unit microdroplets precipitated in the droplet-preferred region.

In addition, in the first example, when the light irradiation time is the short light irradiation time satisfying the range of 10 to 30 seconds, the hemispherical unit microdroplet with the radial liquid crystal array structure is precipitated in both the droplet-preferred region and the droplet-unpreferred region, but a diameter of the hemispherical unit microdroplet precipitated in the droplet-unpreferred region may vary depending on an intensity of visible light irradiated in the light irradiation process (S205).

For example, when the light irradiation time is 30 seconds, the diameter of the hemispherical unit microdroplet precipitated in the droplet-unpreferred region may increase as the intensity of the irradiated visible light increases.

In addition, in the first example, when the light irradiation time is the medium light irradiation time satisfying the range of 40 to 60 seconds, the hemispherical unit microdroplet with the radial liquid crystal array structure is precipitated only in the droplet-preferred region.

In addition, in the first example, when the light irradiation time is the long light irradiation time satisfying the range of 2 to 3 minutes, the hemispherical unit microdroplet with the radial liquid crystal array structure is precipitated only in the droplet-preferred region, and the hemispherical unit microdroplet with the bend liquid crystal alignment structure is precipitated in the droplet-unpreferred region.

That is, when the light irradiation time is the long light irradiation time, the microdroplet may be precipitated in the droplet-unpreferred region, and at the same time, the liquid crystal array structure of the hemispherical unit microdroplet may change.

Meanwhile, referring to FIG. 7, in a second example of the method of fabricating the microdroplet array according to still another embodiment of the present disclosure, a first step (S100) may further include disposing a first electrode 400 between a first substrate 100 and a first orientation membrane layer 110 (S160) and disposing a second electrode 500 between a second substrate 300 and a second orientation membrane layer 310 (S170).

Accordingly, in the second example, the first step (S100) may be obtaining a patterning structure 10 with a structure in which the first substrate 100, the first electrode 400, the first orientation membrane layer 110, a polymer membrane layer 120, a liquid crystal structure layer 200, the second orientation membrane layer 310, the second electrode 500, and the second substrate 300 are sequentially stacked.

In addition, the first orientation membrane layer 110 includes a material that induces the liquid crystal molecules to have the horizontally oriented state.

In addition, in the second example of the method of fabricating the microdroplet array according to still another embodiment of the present disclosure, a slow cooling process (S220) may further include generating an electric field by applying a predetermined voltage to the first electrode 400 and the second electrode 500 (S221).

Here, the predetermined voltage may satisfy a range of 0.8 to 1.2 V/µm.

Accordingly, in the second example, solubility between polymer and liquid crystal may change due to a temperature change during the slow cooling process to be phase-separated, and when the slow cooling process (S220) is completed, the liquid crystal molecules become vertically aligned by the generated electric field, and accordingly, the hemispherical unit microdroplet with the bend liquid crystal alignment structure may be precipitated at the polymer membrane layer-first orientation membrane layer interface, more specifically, on the surface of the first orientation membrane layer 110.

In addition, in the second example of the method of fabricating the microdroplet array according to still another embodiment of the present disclosure, the generating of the electric field by applying the predetermined voltage to the first electrode 400 and the second electrode 500 (S221) may be performed after a droplet is precipitated.

Accordingly, in the second example, in the generating of the electric field by applying the predetermined voltage to the first electrode 400 and the second electrode 500 (S221), when the hemispherical unit microdroplet with the radial liquid crystal array structure is precipitated through the slow cooling process (S220), the liquid crystal molecules inside the precipitated hemispherical unit microdroplet may be induced to be aligned in a bend shape by the generated electric field, or when the hemispherical unit microdroplet with the bend liquid crystal alignment structure is precipitated, the liquid crystal molecules inside the precipitated hemispherical unit microdroplet may be induced to be aligned radially by the generated electric field.

Meanwhile, referring to FIG. 8, in a third example of the method of fabricating the microdroplet array according to still another embodiment of the present disclosure, the liquid crystal structure layer 200 may be a mixed structure composed of liquid crystal molecules, a single molecule, and an initiator.

The single molecule may be included in a range satisfying 9 to 11 wt. % relative to 100 wt. % of the mixed structure, and the initiator may be included in a range satisfying 0.1 to 0.3 wt. % relative to 100 wt. % of the mixed structure.

In addition, in the third example of the method of fabricating the microdroplet array according to still another embodiment of the present disclosure, the second step (S200) may further include performing a photopolymerization reaction on a patterning structure 10 on which the microdroplet array is patterned to convert a pre-patterned microdroplet array 20 into a polymer (S230) after the slow cooling process (S220).

For example, in the third example, when the heating process (S210) is completed, the liquid crystal molecules, the single molecule, and the initiator interact with a polymer matrix to be uniformly diffused into the matrix, and when the slow cooling process (S220) is completed, the liquid crystal molecules may be precipitated as a hemispherical unit microdroplet at a polymer membrane layer-first orientation membrane layer interface, more specifically, on a surface of the first orientation membrane layer 110.

In this case, the hemispherical unit microdroplet has the same composition as the mixed structure, that is, the hemispherical unit microdroplet may be composed of the liquid crystal molecules, the single molecule, and the initiator.

Accordingly, after the slow cooling process (220) is completed, the photopolymerization reaction may be performed to form a hemispherical unit micro polymer, and furthermore, the hemispherical unit micro polymer may be arranged in an irregular pattern or a regular pattern on a two-dimensional plane to pattern a micro polymer array.

### <Microdroplet array>

A microdroplet array according to an embodiment of the present disclosure may be patterned on a polymer membrane layer-first orientation membrane interface through obtaining a patterning structure 10 with a structure in which a liquid crystal structure layer 200 is disposed in a separation space between a first substrate 100 with a polymer membrane layer 120 and a first orientation membrane layer 110 and a second substrate 300 with a second orientation membrane layer 310 and sequentially performing a heating process and a slow cooling process on the obtained patterning structure 10, and may be composed of a plurality of hemispherical unit microdroplets.

Hereinafter, preferred Examples will be presented to help understand the present disclosure. However, the following Examples are provided only to more easily understand the present disclosure, and the content of the present disclosure is not limited by the Examples, and various other modifications and changes may be possible.

### <Example 1> Fabricating of microdroplet array based on liquid crystal 1

First, a patterning structure with a structure in which horizontal polyimide that is a first orientation membrane layer, Poly(octadecyl methacrylate)(PODMA) that is a polymer membrane layer, a liquid crystal that is a liquid crystal structure layer, vertical polyimide that is a second orientation membrane layer, and a glass substrate that is a second substrate are sequentially stacked on a glass substrate that is a first substrate was obtained.

Here, the first orientation membrane layer includes the horizontal polyimide that induces liquid crystal molecules to be horizontally oriented, and the second orientation membrane layer includes the vertical polyimide that induces the liquid crystal molecules to be vertically oriented, thereby inducing the liquid crystal molecules in the liquid crystal to have a vertically oriented state.

Next, the obtained patterning structure was heated to a heating temperature of 35 °C, 40 °C, 45 °C, 50 °C, and 55 °C, and then the heated patterning structure was slowly cooled to room temperature (25 °C) at a cooling rate of 5 °C/min to pattern a microdroplet array composed of a plurality of hemispherical unit microdroplets and having an irregular pattern on the horizontal polyimide (Example 1).

Here, a droplet array patterned at a heating temperature of 35 °C is sample A of Example 1, a droplet array patterned at a heating temperature of 40 °C is sample B of Example 1, a droplet array patterned at a heating temperature of 45 °C is sample C of Example 1, a droplet array patterned at a heating temperature of 50 °C is sample D of Example 1, and a droplet array patterned at a heating temperature of 55 °C is sample E of Example 1.

### <Example 2> Fabricating of microdroplet array based on liquid crystal 2

First, a patterning structure with a structure in which horizontal polyimide that is a first orientation membrane layer, PODMA that is a polymer membrane layer, a liquid crystal that is a liquid crystal structure layer, vertical polyimide that is a second orientation membrane layer, and a glass substrate that is a second substrate are sequentially stacked on a glass substrate that is a first substrate was obtained.

Next, the obtained patterning structure was heated to a heating temperature of 45 °C, and then the heated patterning structure was slowly cooled to room temperature (25 °C) at a cooling rate of 3 °C/min, 5 °C/min, 7 °C/min, 10 °C/min, 15 °C/min, and 20 °C/min to pattern a microdroplet array composed of a plurality of hemispherical unit microdroplets and having an irregular pattern on the horizontal polyimide (Example 2).

Here, a droplet array patterned at a cooling rate of 3 °C/min is sample A of Example 2, a droplet array patterned at a cooling rate of 5 °C/min is sample B of Example 2, a droplet array patterned at a cooling rate of 7 °C/min is sample C of Example 2, a droplet array patterned at a cooling rate of 10 °C/min is sample D of Example 2, a droplet array patterned at a cooling rate of 15 °C/min is sample E of Example 2, and a droplet array patterned at a cooling rate of 20 °C/min is sample F of Example 2.

### <Example 3> Fabricating of microdroplet array based on liquid crystal 3

First, a patterning structure with a structure in which Brilliant Yellow that is a first orientation membrane layer, PODMA that is a polymer membrane layer, a liquid crystal that is a liquid crystal structure layer, vertical polyimide that is a second orientation membrane layer, and a glass substrate that is a second substrate are stacked on a glass substrate that is a first substrate was obtained.

Here, the first orientation membrane layer includes Brilliant Yellow that induces liquid crystal molecules to be horizontally oriented.

Next, visible light satisfying a wavelength range of 430 to 470 nm was irradiated to a partial region of a lower end portion of the obtained patterning structure for 30 seconds (short light irradiation time), 60 seconds (medium light irradiation time), and 3 minutes (long light irradiation time) using a mask, and the visible light-irradiated patterning structure was heated to a heating temperature of 45 °C, and then the heated patterning structure was slowly cooled to room temperature (25 °C) at a cooling rate of 5 °C/min to pattern a microdroplet array composed of a plurality of hemispherical unit microdroplets and having an irregular pattern on a droplet-preferred region of Brilliant Yellow (Example 3).

Here, a microdroplet array irradiated with light for 30 seconds is sample A of Example 3, a microdroplet array irradiated with light for 60 seconds is sample B of Example 3, and a microdroplet array irradiated with light for 3 minutes is sample C of Example 3.

### <Example 4> Fabricating of microdroplet array based on liquid crystal 4

First, a patterning structure was obtained by disposing Brilliant Yellow that is a first orientation membrane layer, PODMA that is a polymer membrane layer, a liquid crystal that is a liquid crystal structure layer, vertical polyimide that is a second orientation membrane layer, and a glass substrate that is a second substrate on a glass substrate that is a first substrate.

Next, visible light satisfying a wavelength range of 430 to 470 nm was irradiated to a partial region of a lower end portion of the obtained patterning structure for 60 seconds using a mask, and the visible light-irradiated patterning structure was heated to a heating temperature of 45 °C, and then the heated patterning structure was slowly cooled to room temperature (25 °C) at a cooling rate of 5 °C/min to pattern a microdroplet array with a square packing pattern and a hexagonal packing pattern as a hemispherical unit microdroplet was selectively positioned in the patterned droplet-preferred region of Brilliant Yellow (Example 4).

In Example 4, the droplet-preferred region was set to have a square grid pattern and a hexagonal grid pattern.

Here, a microdroplet array with the square packing pattern is sample A of Example 4, and a microdroplet array with the hexagonal packing pattern is sample B of Example 4.

### <Example 5> Fabricating of microdroplet array based on liquid crystal 5

First, a patterning structure was obtained by disposing Brilliant Yellow that is a first orientation membrane layer, PODMA that is a polymer membrane layer, a liquid crystal that is a liquid crystal structure layer, vertical polyimide that is a second orientation membrane layer, and a glass substrate that is a second substrate on a glass substrate that is a first substrate.

Next, visible light satisfying a wavelength range of 430 to 470 nm was irradiated to a partial region of a lower end portion of the obtained patterning structure for 60 seconds using a mask, and the visible light-irradiated patterning structure was heated to a heating temperature of 45 °C, and then the heated patterning structure was slowly cooled to room temperature (25 °C) at a cooling rate of 5 °C/min to pattern a microdroplet array with a square packing pattern as a hemispherical unit microdroplet was selectively positioned in the patterned droplet-preferred region of Brilliant Yellow (Example 4).

In Example 5, the droplet-preferred region was set to have a square grid pattern, and a diameter of each unit droplet-preferred region and a spacing distance between the unit droplet-preferred regions were adjusted to 2 µm, 3 µm, 4 µm, 5 µm, 6 µm, 7 µm, 8 µm, 9 µm, and 10 µm to control a diameter and a number density of a patterned droplet.

Here, a microdroplet array patterned with a diameter of a preferred region and a margin distance between the preferred regions of 2 µm is sample A of Example 5, a microdroplet array patterned with the diameter of the preferred region and the margin distance between the preferred regions of 3 µm is sample B of Example 5, a microdroplet array patterned with the diameter of the preferred region and the margin distance between the preferred regions of 4 µm is sample C of Example 5, a microdroplet array patterned with the diameter of the preferred region and the margin distance between the preferred regions of 5 µm is sample D of Example 5, a microdroplet array patterned with the diameter of the preferred region and the margin distance between the preferred regions of 6 µm is sample E of Example 5, a microdroplet array patterned with the diameter of the preferred region and the margin distance between the preferred regions of 7 µm is sample F of Example 5, a microdroplet array patterned with the diameter of the preferred region and the margin distance between the preferred regions of 8 µm is sample G of Example 5, a microdroplet array patterned with the diameter of the preferred region and the margin distance between the preferred regions of 9 µm is Sample H of Example 5, and a microdroplet array patterned with the diameter of the preferred region and the margin distance between the preferred regions of 10 µm is Sample I of Example 5.

### <Example 6> Fabricating of microdroplet array based on liquid crystal 6

First, a patterning structure with a structure in which horizontal polyimide that is a first orientation membrane layer, an indium tin oxide (ITO) electrode that is a first electrode, PODMA that is a polymer membrane layer, a liquid crystal that is a liquid crystal structure layer, vertical polyimide that is a second orientation membrane layer, an ITO electrode that is a second electrode, and a glass substrate that is a second substrate are sequentially stacked on a glass substrate that is a first substrate was obtained.

Here, the first orientation membrane layer includes the horizontal polyimide that induces liquid crystal molecules to be horizontally oriented, and the second orientation membrane layer includes the vertical polyimide that induces the liquid crystal molecules to be vertically oriented, thereby inducing the liquid crystal molecules in the liquid crystal to have the vertically oriented state.

Next, the obtained patterning structure was heated to a heating temperature of 50 °C, and then an electric field was generated by applying 0 V/µm, 0.4 V/µm, and 1.0 V/µm to the ITO electrode, and the heated patterning structure was slowly cooled to room temperature (25 °C) at a cooling rate of 20 °C/min to pattern microdroplet array composed of a plurality of hemispherical unit microdroplets and having an irregular pattern on a horizontal polyimide (Example 6).

Here, a microdroplet array applied with 0 V/µm is sample A of Example 6, a microdroplet array applied with 0.4 V/µm is sample B of Example 6, and a microdroplet array applied with 1.0 V/µm is sample C of Example 6.

### <Example 7> Fabricating of microdroplet array based on liquid crystal 7

First, a patterning structure with a structure in which Brilliant Yellow that is a first orientation membrane layer, PODMA that is a polymer membrane layer, a liquid crystal that is a liquid crystal structure layer, vertical polyimide that is a second orientation membrane layer, and a glass substrate that is a second substrate are stacked on a glass substrate that is a first substrate was obtained.

Here, the first orientation membrane layer includes Brilliant Yellow that induces liquid crystal molecules to be horizontally oriented.

Next, visible light satisfying a wavelength range of 450 nm was irradiated to a partial region of a lower end portion of the obtained patterning structure for 30 seconds (short light irradiation time) using a Grayscale line pattern mask, and the visible light-irradiated patterning structure was heated to a heating temperature of 50 °C, and then the heated patterning structure was slowly cooled to room temperature (25 °C) at a cooling rate of 5 °C/min to pattern a microdroplet array composed of a plurality of hemispherical unit microdroplets and having an irregular pattern on both a droplet-preferred region and a droplet-unpreferred region of Brilliant Yellow (Example 7).

### <Example 8> Fabricating of microdroplet array based on liquid crystal 8

First, a patterning structure with a structure in which horizontal polyimide that is a first orientation membrane layer, Poly(butyl methacrylate)(PBMA), Poly(lauryl methacrylate)(PLMA) that are polymer membrane layers, a liquid crystal that is a liquid crystal structure layer, vertical polyimide that is a second orientation membrane layer, and a glass substrate that is a second substrate are sequentially stacked on a glass substrate that is a first substrate was obtained.

Here, the first orientation membrane layer includes the horizontal polyimide that induces liquid crystal molecules to be horizontally oriented, and the second orientation membrane layer includes the vertical polyimide that induces the liquid crystal molecules to be vertically oriented, thereby inducing the liquid crystal molecules in the liquid crystal to have the vertically oriented state.

Next, the obtained patterning structure was heated to a heating temperature of 50 °C, and then the heated patterning structure was slowly cooled to room temperature (25 °C) at a cooling rate of 5 °C/min to pattern a microdroplet array composed of a plurality of hemispherical unit microdroplets and having an irregular pattern on the horizontal polyimide (Example 8).

Here, a droplet array patterned with PBMA is sample A of Example 8, and a droplet array patterned with PLMA is sample B of Example 8.

### <Experimental Example 1> Microstructure evaluation according to heating temperature

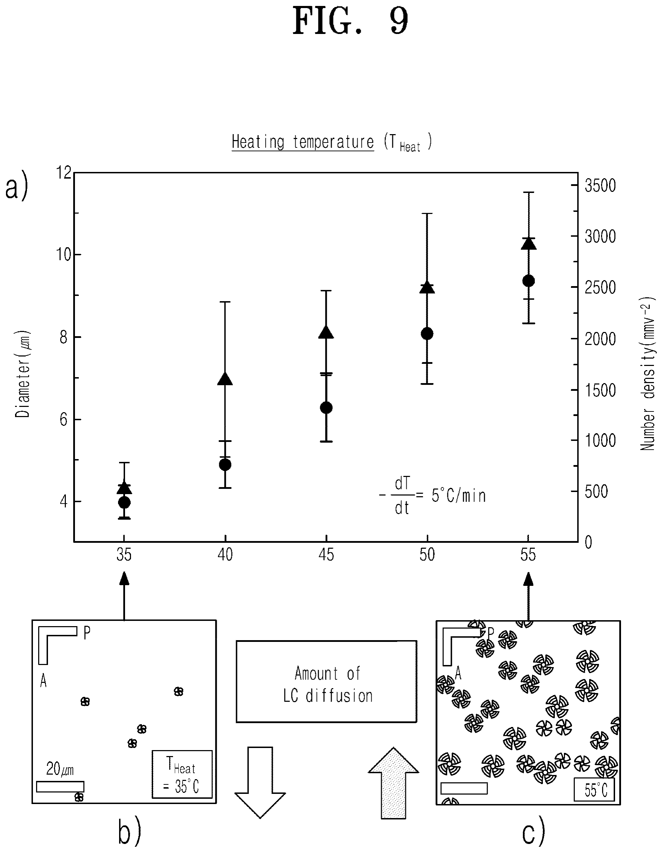

Samples A to E of Example 1 were prepared, a diameter and a number density of a droplet of the prepared samples were analyzed, and the result is shown in FIG. 9.

FIG. 9 is an experimental result for evaluating diameter control of a droplet according to a heating temperature.

FIG. 9A is a graph showing the diameter of the droplet and the number density of the droplet of Example 1, FIG. 9B is an optical microscope image according to sample A of Example 1, and FIG. 9C is an optical microscope image according to sample E of Example 1.

As shown in FIG. 9, it was confirmed that as the heating temperature (THeat) increases in a heating process, the diameter and the number density of the droplet of a hemispherical unit microdroplet increases.

### <Experimental Example 2> Microstructure evaluation according to cooling rate

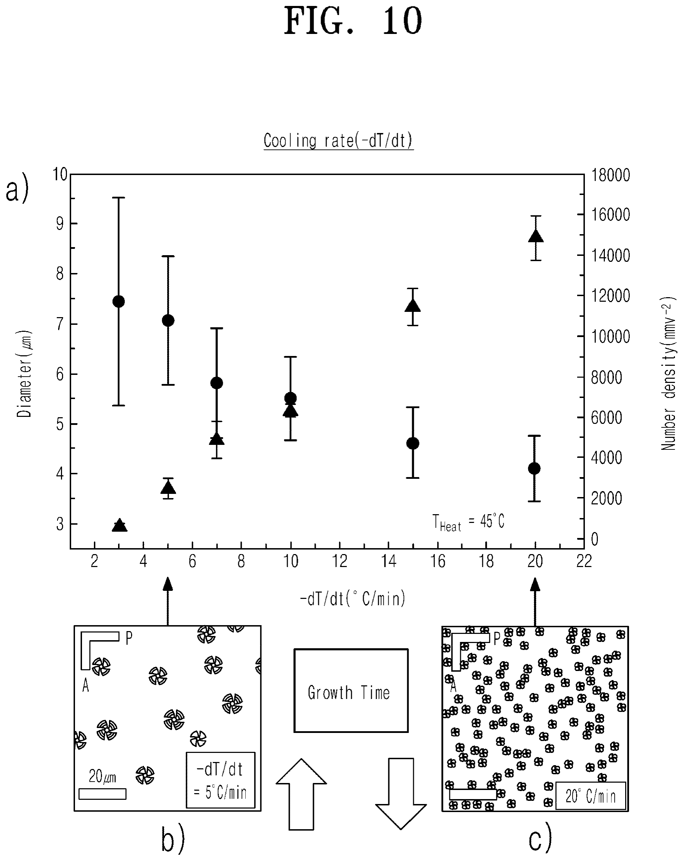

Samples A to F of Example 2 were prepared, a diameter and a number density of a droplet of the prepared samples were analyzed, and the result is shown in FIG. 10.

FIG. 10 is an experimental result for evaluating a density control of the droplet according to a cooling rate.

FIG. 10A is a graph showing the diameter of the droplet and the number density of the droplet of Example 2, FIG. 10B is an optical microscope image according to sample B of Example 2, and FIG. 10C is an optical microscope image according to sample F of Example 2.

As shown in FIG. 10, it was confirmed that as the cooling rate increases in the slow cooling process, the diameter of the droplet of the hemispherical unit microdroplet decreases and the number density of the droplet increases.

### <Experimental Example 3> Evaluation of droplet-preferred position according to selective light irradiation

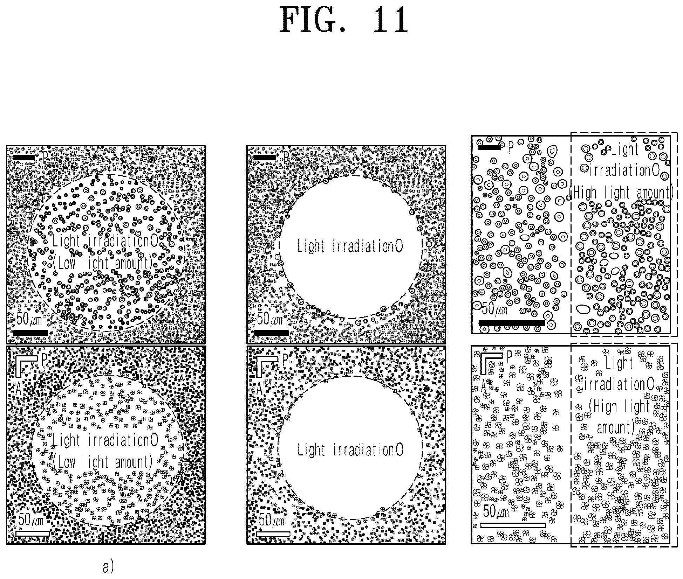

Samples A to C of Example 3 were prepared, the prepared samples were analyzed with an optical microscope, and the result is shown in FIG. 11.

FIG. 11 is an experimental result for evaluating a preferred position and a liquid crystal array structure of the droplet.

FIG. 11A is a bright field and polarized optical microscope image according to sample A of Example 3, FIG. 11B is a bright field and polarized optical microscope image according to sample B of Example 3, and FIG. 11C is a bright field and polarized optical microscope image according to sample C of Example 3.

As shown in FIG. 11A, it was confirmed that a hemispherical unit microdroplet with a radial liquid crystal array structure was precipitated in both a droplet-preferred region that is a non-light-irradiated region, and a droplet-unpreferred region that is a light-irradiated region by a phase separation induction phenomenon.

As shown in FIG. 11B, it was confirmed that the hemispherical unit microdroplet with the radial liquid crystal array structure was precipitated only in the droplet-preferred region that is the non-light-irradiated region and was not precipitated in the droplet-unpreferred region that is the light-irradiated region by the phase separation induction phenomenon.

As shown in FIG. 11C, it was confirmed that the hemispherical unit microdroplet with the radial liquid crystal array structure was precipitated in the droplet-preferred region, and a hemispherical unit microdroplet with a bend liquid crystal alignment structure was precipitated in the droplet-unpreferred region.

### <Experimental Example 4> Change of packing pattern according to selective light irradiation

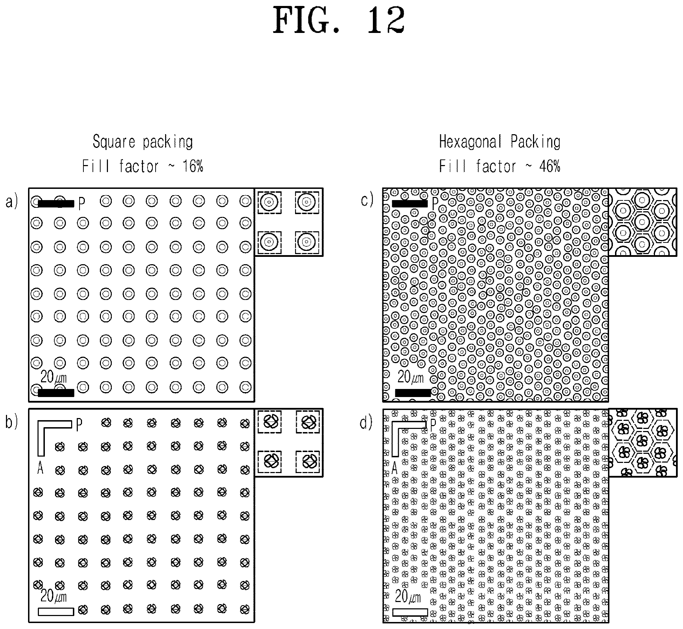

Samples A and B of Example 4 were prepared, the prepared samples were analyzed with the optical microscope, and the result is shown in FIG. 12.

FIG. 12 is an experimental result for evaluating patterning of a microdroplet array with various shapes.

FIG. 12A is a bright field optical microscope image according to sample A of Example 4, FIG. 12B is a polarized optical microscope image according to sample A of Example 4, FIG. 12C is a bright field optical microscope image according to sample B of Example 4, and FIG. 12D is a polarized optical microscope image according to sample B of Example 4.

As shown in FIG. 12, it was confirmed that a hemispherical unit microdroplet is precipitated only in a patterned droplet-preferred region (square grid pattern, hexagonal grid pattern) that is a non-light-irradiated region and is not precipitated in a droplet-unpreferred region that is a light-irradiated region, and accordingly, it was confirmed that a microdroplet array with a square packing pattern and a microdroplet array with a hexagonal packing pattern may be fabricated.

### <Experimental Example 5> Evaluation of patterning of droplet array

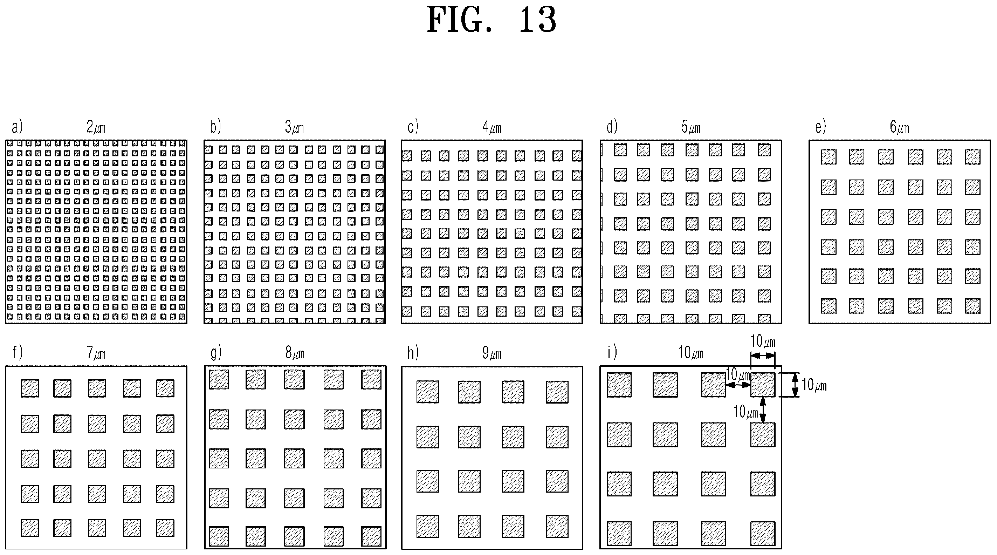

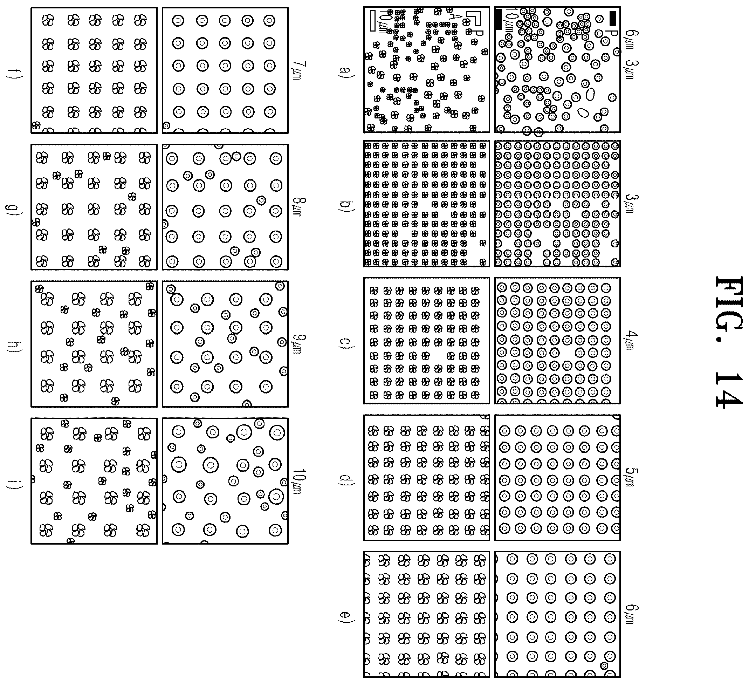

Samples of Example 5 were prepared, the prepared samples were analyzed with the optical microscope, and the results are shown in FIG. 13 and FIG. 14.

FIG. 13 is a view for describing a photomask design, and FIG. 14 is an experimental result for evaluating patterning of a microdroplet array consisting of droplets of various diameters and having a square packing pattern.

FIG. 13A to FIG. 13I are schematic views of a photomask with various mask patterns.

FIG. 14A is a bright field optical microscope image and a polarized optical microscope image according to sample A of Example 5, FIG. 14B is a bright field optical microscope image and a polarized optical microscope image according to sample B of Example 5, FIG. 14C is a bright field optical microscope image and a polarized optical microscope image according to sample C of Example 5, FIG. 14D is a bright field optical microscope image and a polarized optical microscope image according to sample D of Example 5, FIG. 14E is a bright field optical microscope image and a polarized optical microscope image according to sample E of Example 5, FIG. 14F is a bright field optical microscope image and a polarized optical microscope image according to sample F of Example 5, FIG. 14G is a bright field optical microscope image and a polarized optical microscope image according to sample G of Example 5, FIG. 14H is a bright field optical microscope image and a polarized optical microscope image according to sample H of Example 5, and FIG. 14I is a bright field optical microscope image and a polarized optical microscope image according to sample I of Example 5.

As shown in FIG. 13, a length of one side of a square pattern and a gap between patterns were both fabricated uniformly as above-described values (2 to 10 µm). As in a case of 2 µm, when both a size and a gap of a liquid crystal formation region are small, an absolute amount of the liquid crystal that may be phase-separated decreases because a droplet formation region is small, and the droplet grows with steric hinderance during a growth process thereof because the gap between the patterns is small, and thus the growth of the droplet may be relatively suppressed. Accordingly, the droplet with an initially set diameter of 2 µm may be obtained. Conversely, as in a case of 10 µm, when both the size and the gap of the liquid crystal formation region are large, the absolute amount of the liquid crystal that may be phase-separated increases because the droplet formation region is large, and the droplet grows sufficiently without the steric hinderance during the growth process thereof because the gap between the patterns is large, and thus the droplet may grow significantly. Accordingly, the droplet of an initially set diameter of 10 µm may be obtained. A method of controlling the size and the gap of the droplet formation region may be applied not only to the square pattern but to all of the above-described patterns.

As shown in FIG. 14, it was confirmed that the microdroplet array in the samples of Example 5 has a square packing pattern of different diameters and number densities depending on a mask pattern used. Specifically, it was confirmed that as a size of a unit droplet-preferred region in the mask pattern decreases and the gap between the unit preferred regions decreases, a diameter of a precipitated droplet decreases.

A decrease in the size of the unit droplet-preferred region has an effect of reducing an absolute amount of the precipitated liquid crystal, and a decrease in a spacing distance between the unit droplet-preferred regions increases a possibility of a precipitated liquid crystal-based droplet inhibiting each other's growth. Accordingly, it was confirmed that the diameter of the microdroplet may be controlled through patterning of the droplet-preferred region between 2 µm and 10 µm.

### <Experimental Example 6> Evaluation of optical property of droplet array according to diameter of droplet

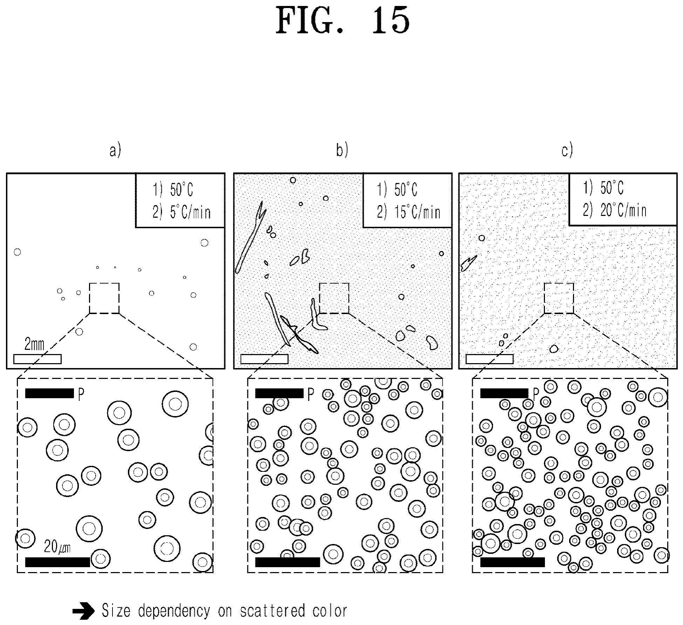

Samples B, E, and F of Example 2 were prepared, macroscopic optical properties and microstructures of the prepared samples were analyzed, and the result is shown in FIG. 15.

FIG. 15 is an experimental result for describing color expression according to a diameter of a droplet.

FIG. 15A is a view showing scattered light and a microstructure according to sample B of Example 2, FIG. 15B is a view showing scattered light and a microstructure according to sample E of Example 2, and FIG. 15C is a view showing scattered light and a microstructure according to sample F of Example 2.

As shown in FIG. 15, it was confirmed that the samples of Example 2 scatter light of different wavelengths depending on the diameter of a unit droplet of each sample, and it was confirmed that sample B of Example 2 scatters light in a wavelength of 620 to 700 nm (red color), sample E of Example 2 scatters light in a wavelength of 495 to 570 nm (green color), and sample F of Example 2 scatters light in a wavelength of 450 to 495 nm (blue color).

### <Experimental Example 7> Evaluation of optical property of droplet array according to optical power density of light irradiation

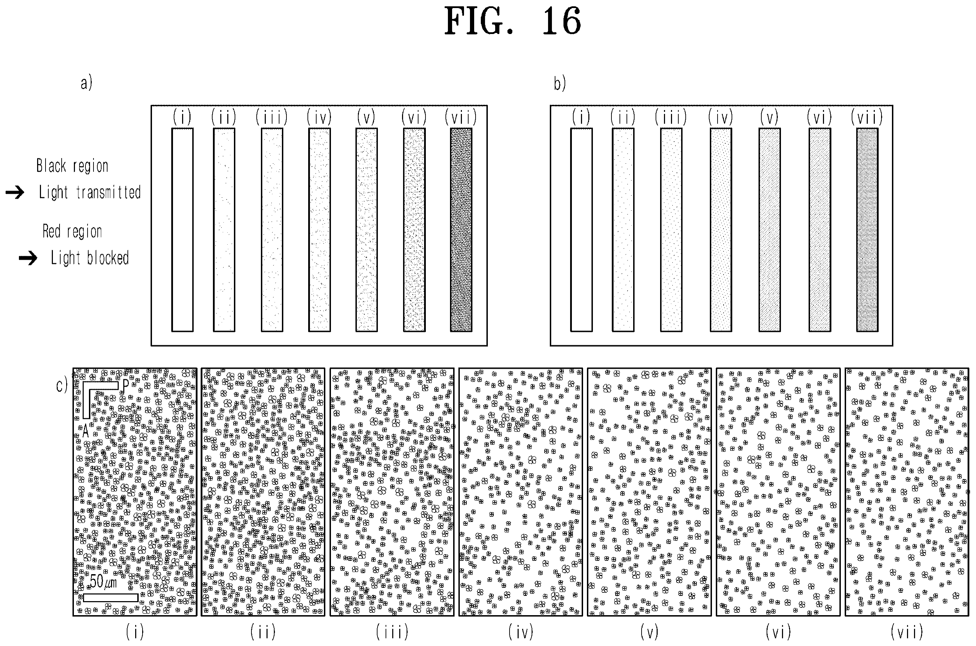

A sample of Example 7 was prepared, an optical property and a microstructure of the prepared sample were evaluated, and the result is shown in FIG. 16.

FIG. 16 is an experimental result for describing color expression according to an optical power density of light irradiation.

FIG. 16A is a view for describing a Grayscale line pattern mask, FIG. 16B is a view showing scattered light of the sample of Example 7 in which the Grayscale line pattern is formed, and FIG. 16C is a view showing the microstructure of the sample of Example 7 in which the Grayscale line pattern is formed.

As shown in FIG. 16A, the sample of Example 7 was obtained using the Grayscale line pattern mask. The Grayscale line pattern mask has a line pattern structure designed in Grayscale and is utilized for controlling an optical power density of light when forming a pattern. The line pattern structure includes six lines (ii to vii) arranged at regular intervals, and light may be transmitted through the line pattern structure. That is, light irradiated to the Grayscale line pattern mask is separated into six lights with different optical power densities, and the separated six lights may be irradiated to a patterning structure.

In FIG. 16A, (i) means a region in which light transmission is impossible (a region excluding the line pattern structure), and an optical power density of light transmitted through a first line (ii) is the smallest, an optical power density of light transmitted through a sixth line (vii) is the largest, and more specifically, the optical power density of the light transmitted through the first line (ii) may be 6.09 mw/cm², an optical power density of light transmitted through a second line (iii) may be 43.6 mw/cm², an optical power density of light transmitted through a third line (iv) may be 119.9 mw/cm², an optical power density of light transmitted through a fourth line (v) may be 225.7 mw/cm², an optical power density of light transmitted through a fifth line (vi) may be 359 mw/cm² and the optical power density of the light transmitted through the sixth line (vii) may be 472 mw/cm²

As shown in FIG. 16B, it was confirmed that the sample of Example 7 has six microdroplet array lines corresponding to the six lines (ii to vii) by using the Grayscale line pattern mask. The six microdroplet array lines are a region where the six lights with different optical power densities are irradiated and correspond to droplet-unpreferred regions, but since visible light was irradiated for 30 seconds (short light irradiation time), a formation of a droplet may be possible.

In addition, it was confirmed that the six microdroplet array lines are the region where the six lights with different optical power densities are irradiated, each array line scatters light in different wavelengths, and it was confirmed that a droplet array line corresponding to the second line (iii) scatters light in a wavelength most similar to a region corresponding to (i). In addition, when reviewing scattered light from the droplet array line corresponding to the second line (iii) to the droplet array line corresponding to the sixth line (vii), it was confirmed that a blueshift of the scattered light occurs as the optical power density of the irradiated light increases.

As shown in FIG. 16C, when reviewing the microstructure of the region corresponding to (i) and the six microdroplet array lines corresponding to the six lines (ii to vii), as the optical power density of the irradiated light increases, the diameter of the droplet increases and the number density of the droplet decreases, and it was confirmed that a color of each microdroplet array line changes due to the change in the diameter and the number density of the droplet according to the optical power density of the irradiated light.

### <Experimental Example 8> Evaluation of optical property of droplet array according to electric field

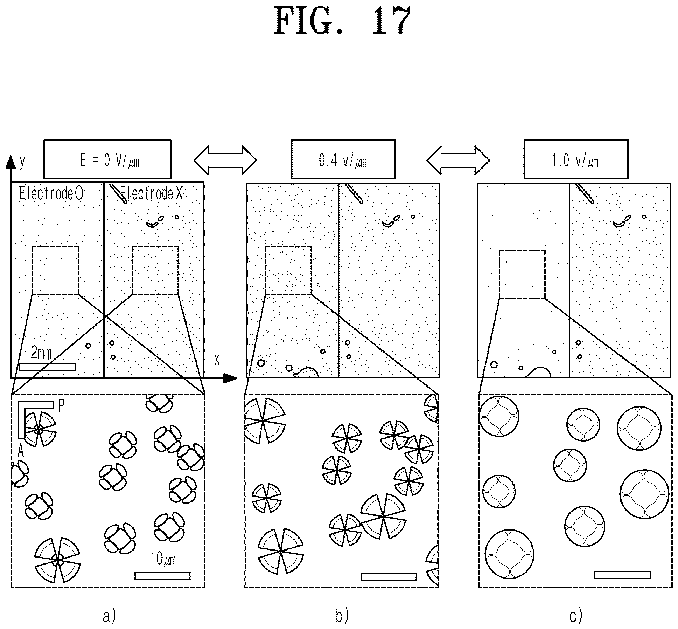

Sample F of Example 2 and samples A, B, and C of Example 6 were prepared, macroscopic optical properties according to an electric field and microstructures of the prepared samples were analyzed, and the result is shown in FIG. 17.

FIG. 17 is an experimental result for describing color expression according to a change in a liquid crystal array structure after electric field application.

FIG. 17A is a view showing scattered light and a microstructure according to sample F of Example 2 and sample A of Example 6, FIG. 17B is a view showing scattered light and a microstructure according to sample F of Example 2 and sample B of Example 6, and FIG. 17C is a view showing scattered light and a microstructure according to sample F of Example 2 and sample C of Example 6.

As shown in FIG. 17, it was confirmed that the samples of Example 6 scatter light of different wavelengths according to a magnitude of an applied voltage, and it was confirmed that a radial liquid crystal array structure is shown under applied voltages of 0 V/µm and 0.4 V/µm, and a bend liquid crystal alignment structure is shown under an applied voltage of 1.0 V/µm.

### <Experimental Example 9> Evaluation of microstructure according to polymer material (polymer membrane layer)

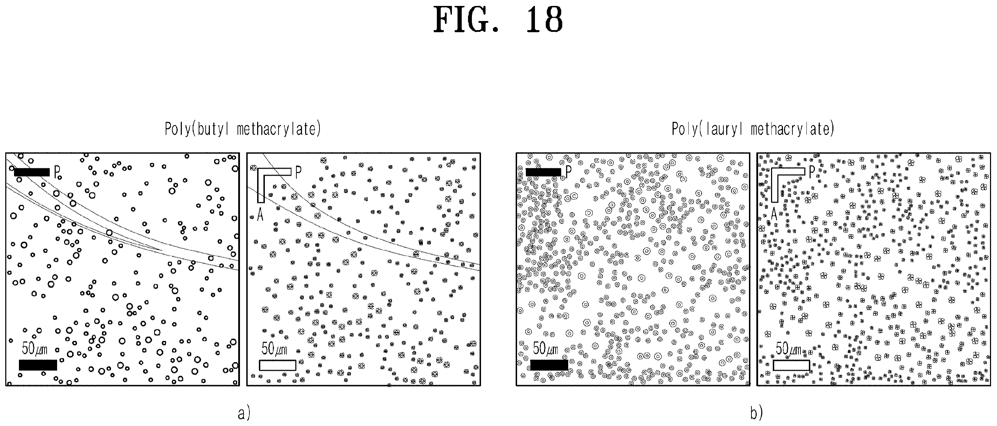

Samples A to B of Example 8 were prepared, microstructures of the prepared samples were analyzed, and the result is shown in FIG. 18.

FIG. 18 is an experimental result for evaluating patterning of a microdroplet array according to a polymer material.

FIG. 18A is a bright field and polarized optical microscope image according to sample A of Example 8, and FIG. 18b) is a bright field and polarized optical microscope image according to sample B of Example 8.

As shown in FIG. 18, when Poly(lauryl methacrylate) or Poly(butyl methacrylate) with similar properties to PODMA were used instead of using PODMA as a polymer membrane layer, it was confirmed that it is possible to pattern a microdroplet array by inducing a phase separation phenomenon in which liquid crystal molecules are precipitated into a hemispherical unit microdroplet.

Although the method of fabricating the microdroplet array according to the embodiments of the present disclosure has been described as specific embodiments, it is merely an example, and the present disclosure is not limited thereto and it should be interpreted to have the broadest scope in accordance with the basic idea disclosed in this specification. Those skilled in the art may combine and substitute the disclosed embodiments to implement embodiments not specified, but this also does not depart from the scope of the present disclosure. In addition, those skilled in the art may easily change or modify the disclosed embodiments based on this specification, and it is clear that such changes or modifications also fall within the scope of the present disclosure.

## Claims

1. A method of fabricating a microdroplet array(S10), the method comprising:
a first step(S100) of obtaining a patterning structure(10) with a structure in which a liquid crystal structure layer(200) is disposed in a separation space between a first substrate(100) with a polymer membrane layer(120) and a first orientation membrane layer(110) and a second substrate(300) with a second orientation membrane layer(310); and
a second step(S200) of patterning a microdroplet array(20) composed of a plurality of hemispherical unit microdroplets on a polymer membrane layer-first orientation membrane layer interface by sequentially performing a heating process and a slow cooling process on the obtained patterning structure(10).

2. The method of claim 1, wherein the first step(S100) includes:
(S110) disposing the first orientation membrane layer(110) on the first substrate(100);
(S120) disposing the polymer membrane layer(120) on the first substrate(100) on which the first orientation membrane layer(110) is disposed;
(S130) disposing the second orientation membrane layer(310) on the second substrate(300);
(S140) disposing the second substrate(300) on which the second orientation membrane layer(310) is disposed on the first substrate(100) on which the polymer membrane layer(120) is disposed to be spaced apart by a predetermined distance; and
(S150) obtaining the patterning structure(10) by disposing the liquid crystal structure layer(200) in the separation space formed between the first substrate(100) on which the polymer membrane layer(120) is disposed and the second substrate(300) on which the second orientation membrane layer(310) is disposed.

3. The method of claim 1 or 2, wherein, in the first step(S100),
the first orientation membrane layer(110) induces liquid crystal molecules to have any one of a vertically oriented state and a horizontally oriented state.

4. The method of any one of claims 1 to 3, wherein the second step(S200) includes:
a heating process(S210) of heating the obtained patterning structure(10) to a predetermined heating temperature; and
a slow cooling process(S220) of slowly cooling the heated patterning structure(10) to room temperature at a predetermined cooling rate.

5. The method of claim 4, wherein the heating process(S210) is inducing liquid crystal molecules in the liquid crystal structure layer(200) to be uniformly diffused into a matrix structure as the liquid crystal molecules are thermally dissolved into a polymer matrix of the polymer membrane layer(120).

6. The method of claim 5, wherein the slow cooling process(S220) is patterning the microdroplet array by inducing a phase separation phenomenon in which the thermally dissolved liquid crystal molecules are precipitated as a hemispherical unit microdroplet with a radial liquid crystal array structure at the polymer membrane layer-first orientation membrane layer interface.

7. The method of any one of claims 4 to 6, wherein, in the slow cooling process(S220), a diameter and a number density of the hemispherical unit microdroplet are controlled by any one of the heating temperature and the cooling rate.

8. The method of claim 7, wherein, in the slow cooling process(S220), when the heating temperature increases, the diameter and the number density of the hemispherical unit microdroplet increase as an amount of the liquid crystal molecules that are thermally dissolved into the polymer matrix increases, and
when the heating temperature decreases, the diameter and the number density of the hemispherical unit microdroplet decrease as the amount of the liquid crystal molecules that are thermally dissolved into the polymer matrix decreases.

9. The method of claim 8, wherein, in the slow cooling process(S220), when the cooling rate increases, the diameter of the hemispherical unit microdroplet decreases and the number density thereof increases as a change amount in thermal energy per hour decreases and a growth time of the droplet decreases, and
when the cooling rate decreases, the diameter of the hemispherical unit microdroplet increases and the number density thereof decreases as the change amount in thermal energy per hour increases and the growth time of the droplet increases.

10. The method of any one of claims 4 to 9, wherein the second step(S200) further includes a light irradiation process(S205) of irradiating light to a partial region of a lower end portion of the obtained patterning structure(10) before the heating process(S210).

11. The method of claim 10, wherein the light irradiation process(S205) is partitioning a surface of the first orientation membrane layer(110) into a droplet-preferred region and a droplet-unpreferred region by controlling a work of adhesion between a liquid crystal and a surface (WSL) of the first orientation membrane layer(110) through selective light irradiation,
the droplet-preferred region is a region in which the phase separation phenomenon is activated, and
the droplet-unpreferred region is a region in which the phase separation phenomenon is suppressed.

12. The method of claim 11, wherein, in the light irradiation process(S205), the droplet-preferred region has any one grid pattern selected from a circular grid pattern, a triangular grid pattern, a square grid pattern, a pentagonal grid pattern, a hexagonal grid pattern, a heptagonal grid pattern, an octagonal grid pattern, a nonagonal grid pattern, and a decagonal grid pattern.

13. The method of claim 11 or 12, wherein, in the slow cooling process(S220), as the hemispherical unit microdroplet is selectively positioned in the droplet-preferred region, a microdroplet array with any one pattern selected from a square packing pattern in which a droplet is arranged in a square grid pattern on a two-dimensional plane and a hexagonal packing pattern in which the droplet is arranged in a hexagonal grid pattern on the two-dimensional plane is patterned.

14. The method of claim 13, further including a third step(S300) of performing the second step(S200) again after removing the pre-patterned microdroplet array(20) by sequentially performing a reverse reaction process of irradiating light in a predetermined wavelength range and a heat treatment process on the patterning structure(10) on which the microdroplet array is patterned after the second step(S200).

15. A microdroplet array is patterned at a polymer membrane layer-first orientation membrane layer interface by obtaining a patterning structure(10) with a structure in which a liquid crystal structure layer(200) is disposed in a separation space between a first substrate(100) with a polymer membrane layer(120) and a first orientation membrane layer(110) and a second substrate(300) with a second orientation membrane layer(310) and sequentially performing a heating process and a slow cooling process on the obtained patterning structure(10), and
is composed of a plurality of hemispherical unit microdroplets.
